# EUROPEAN PATENT APPLICATION

(11) **EP 4 560 164 A1**
(43) Date of publication of application: **28.05.2025**
(21) Application number: 23871484.4
(22) Date of filing: 07.08.2023
(51) Int. Cl.: F16H 57/04, B60L 15/00, F16D 1/02, H02K 7/116

(54) **TRAVELING DEVICE OF WORK VEHICLE**

(30) Priority: 29.09.2022 JP 2022156819
(71) Applicant: Hitachi Construction Machinery Co., Ltd., Tokyo 110-0015 (JP)
(72) Inventor: KAWADA, Rio, Tsuchiura-shi, Ibaraki 300-0013 (JP); IWABUCHI, Yuutarou, Tsuchiura-shi, Ibaraki 300-0013 (JP); SATOU, Takahiro, Tsuchiura-shi, Ibaraki 300-0013 (JP); UCHINO, Tetsurou, Tsuchiura-shi, Ibaraki 300-0013 (JP); TAKESHITA, Daisuke, Tsuchiura-shi, Ibaraki 300-0013 (JP)
(74) Representative: Manitz Finsterwald Patent- und Rechtsanwaltspartnerschaft mbB
(86) International application number: PCT/JP2023/028743
(87) International publication number: WO 2024/070242

(57) **Abstract**

A traveling device (11) includes a coupling (38) for joint between a motor shaft (14) and a rotation shaft (15), a coupling housing (46) that fits on an outer peripheral surface of the coupling (38), a coupling oil passage (43) that is provided in the coupling (38) to supply lubricating oil (L) to spline coupling portions (39A), (40A) between the motor shaft (14) and the rotation shaft (15) and the coupling (38), and a housing oil passage (47) that is provided in the coupling housing (46) to introduce part of the lubricating oil (L) to the coupling oil passage (43). The coupling housing (46) is provided with an oil reservoir portion (50) for storing the lubricating oil (L) that is supplied to the spline coupling portions (39A), (40A) between the motor shaft (14) and rotation shaft (15) and the coupling (38). The oil reservoir portion (50) is shaped so that a capacity of a portion, which is positioned on the radially upper side of the coupling housing (46), of the oil reservoir portion (50) is made larger.

## Description

### TECHNICAL FIELD

The present invention relates to a traveling device that is used suitably for a working vehicle having vehicle wheels, a dump truck, for example.

### BACKGROUND ART

A traveling device that is provided for a working vehicle having vehicle wheels, a dump truck, for example is provided with an electric motor that is provided in a vehicle body, a motor shaft that outputs rotation of the electric motor, a rotation shaft to which the rotation of the motor shaft is transmitted, a gear reduction mechanism that decelerates the rotation of the rotation shaft and transmits the decelerated rotation to the vehicle wheels, and a coupling for joint between the motor shaft and the rotation shaft. A connection between the coupling and the motor shaft and a connection between the coupling and the rotation shaft are respectively made by spline coupling. Therefore, lubricating oil is regularly supplied to spline coupling portions between the coupling and the motor shaft and between the coupling and the rotation shaft to prevent wear of the spline coupling portions.

In this way, the spline coupling portions of the two shafts jointed by the spline coupling are usually lubricated by a lubricant agent. For example, in the invention according to

Patent Document 1 lubricating oil is supplied to a spline coupling portion between a rotation shaft and a gear reduction mechanism and the lubricating oil is prevented from flowing into an electric motor side by an oil seal in sliding contact with an outer peripheral surface of the rotation shaft (Patent Document 1).

### PRIOR ART DOCUMENT

### PATENT DOCUMENT

Patent Document 1: Japanese Patent Laid-Open No. 2004-360726 A

### SUMMARY OF THE INVENTION

However, for example, in a working device on which a large-sized electric motor in a dump truck is mounted, since a motor shaft with a large diameter rotates at high speeds, it is difficult that an oil seal in sliding contact with an outer peripheral surface of a motor shaft is used to seal the electric motor from lubricating oil. Meanwhile, in a case of enclosing a lubricant agent of grease or the like into the spline coupling portion, abrasion powder generated from the spline coupling portion is unfortunately accumulated to cause fletching abrasion. Further, the lubricant agent is necessary to be periodically enclosed to the spline coupling portion, therefore posing a problem of increasing a burden of the maintenance work.

An object of the present invention is to provide a traveling device for a working vehicle that can appropriately lubricate coupling portions between a coupling and a motor shaft and a rotation shaft.

An aspect of the present invention is applied to a traveling device for a working vehicle comprising: a motor that is provided on a vehicle body in the working vehicle having vehicle wheels; a motor shaft that outputs rotation of the motor; a rotation shaft to which the rotation of the motor shaft is transmitted; a gear reduction mechanism that decelerates the rotation of the rotation shaft and transmits the decelerated rotation to the vehicle wheels; a lubricating oil circulation circuit that supplies lubricating oil to the gear reduction mechanism; a cylindrical coupling for joint between the motor shaft and the rotation shaft; a coupling housing that is provided in the motor to be provided with a fitting portion slidably fitted on an outer peripheral surface of the coupling; a coupling oil passage that is provided in the coupling to supply the lubricating oil to a coupling portion between the motor shaft and the coupling and a coupling portion between the rotation shaft and the coupling; and a housing oil passage that is provided in the coupling housing to branch part of the lubricating oil flowing in the lubricating oil circulation circuit to be introduced to the coupling oil passage, characterized by including an oil reservoir portion that is provided in the coupling housing to be communicated with the housing oil passage and the coupling oil passage in a state where the coupling is covered from an outer peripheral side thereof and to store the lubricating oil to be supplied through the coupling oil passage to the coupling portion between the motor shaft and the coupling and the coupling portion between the rotation shaft and the coupling, wherein the oil reservoir portion is shaped so that a capacity of a portion positioned on a radially upper side of the coupling housing is larger than a capacity of a portion positioned on a radially lower side of the coupling housing.

According to the aspect of the present invention, the lubricating oil stored in the portion, which has the shape of which a capacity becomes larger, of the oil reservoir portion in the coupling housing smoothly flows downwards by its own weight. As a result, the lubricating oil can smoothly be supplied through the coupling oil passage to the coupling portion between the motor shaft and the coupling and the coupling portion between the rotation shaft and the coupling, appropriately lubricating the coupling portions.

### BRIEF DESCRIPTION OF THE DRAWINGS

Fig. 1 is a left side view showing a dump truck to which a traveling device according to an embodiment of the present invention is applied.

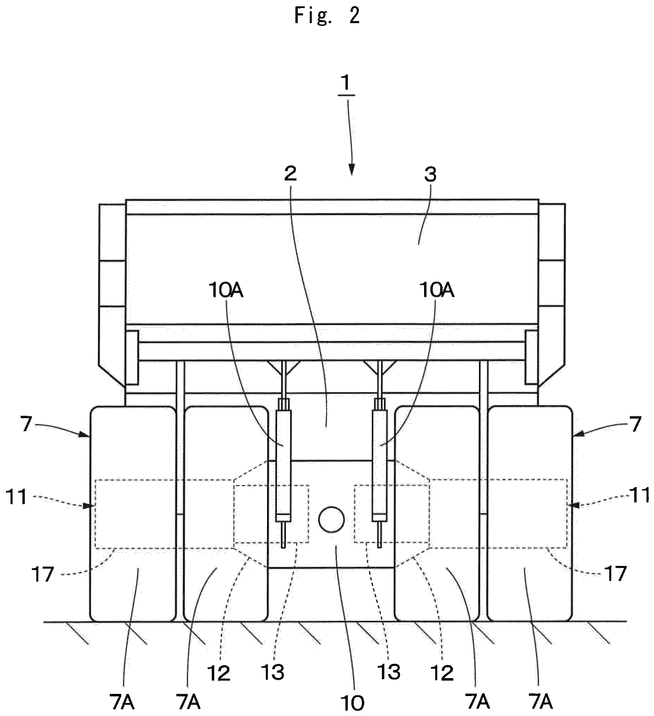

Fig. 2 is a rear view showing the dump truck, as viewed from the backside.
Fig. 3 is a cross section showing a traveling device on the rear wheel side, as viewed in a direction of arrows III-III in Fig. 1.

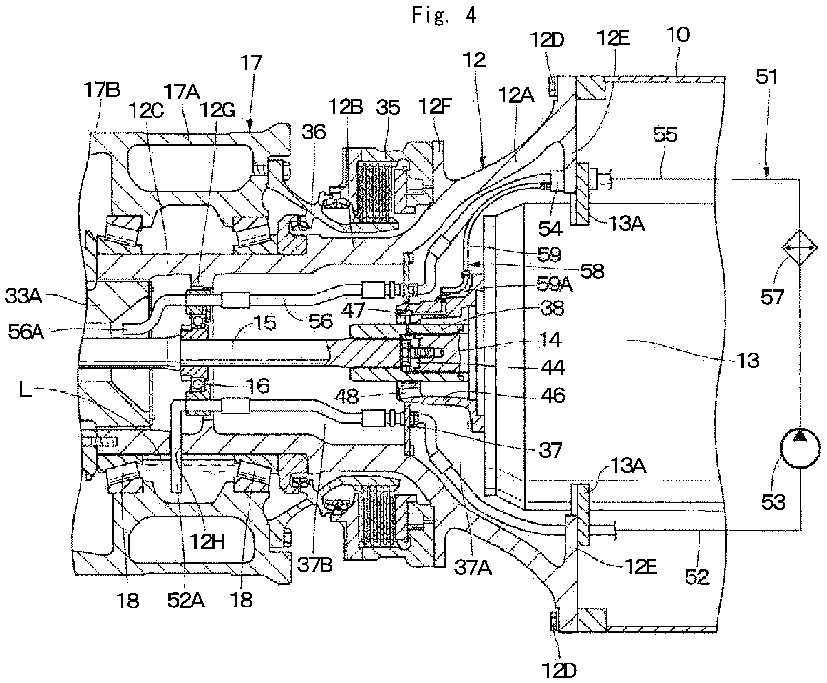

Fig. 4 is an enlarged view showing a motor shaft, a rotation shaft, a coupling, a coupling housing and the like in Fig. 3.
Fig. 5 is an essential-part enlarged view showing an essential part of the coupling, a coupling oil passage, the coupling housing, a housing oil passage, a discharge oil passage and the like.
Fig. 6 is a cross section showing the coupling as a single unit.
Fig. 7 is a cross section showing a spline coupling portion between the motor shaft and the coupling, as viewed in a direction of arrows VII-VII in Fig. 5.
Fig. 8 is an exploded view showing a state where the motor shaft, the rotation shaft, the coupling, the coupling housing and the like are exploded.
Fig. 9 is a cross section showing the coupling, the coupling oil passage, the coupling housing, the housing oil passage, an oil reservoir portion and the like, as viewed in a direction of arrows IX-IX in Fig. 5.
Fig. 10 is an enlarged cross section showing a state where an open end of the coupling oil passage is enlarged.
Fig. 11 is a cross section showing a first modification example regarding the oil reservoir portion in a position as similar to that in Fig. 9.
Fig. 12 is a cross section showing a second modification example regarding a large-diameter open end of the coupling oil passage.

### MODE FOR CARRYING OUT THE INVENTION

Hereinafter, a traveling device for a working vehicle according to an embodiment of the present invention will be in detail explained with reference to the accompanying drawings by taking a case of being applied to a dump truck of a rear drive system as an example.

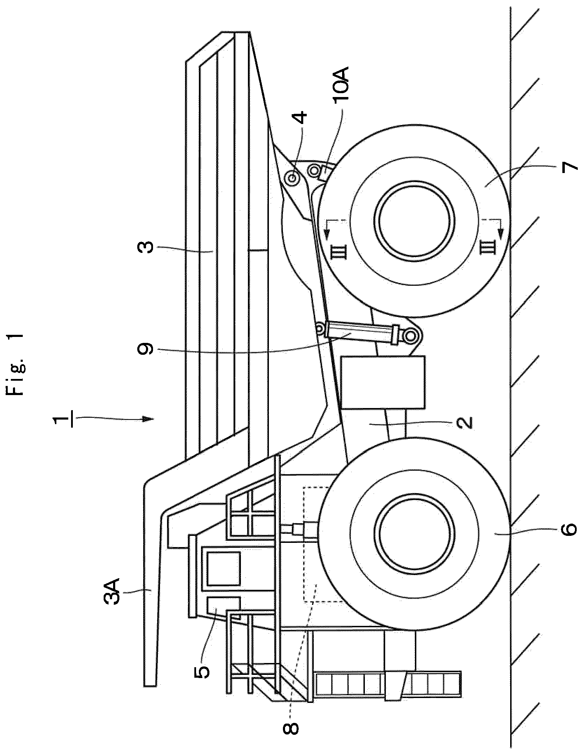

In Fig. 1, a dump truck 1 includes a vehicle body 2 having a strong frame structure, a vessel (loading platform) 3 mounted on the vehicle body 2 to be capable of lifting and tilting, a cab 5 provided in the front part of the vehicle body 2, and left and right front wheels 6 and left and right rear wheels 7 as vehicle wheels.

The vessel 3 is formed as a large-sized container for loading heavy baggage such as crushed stones. A rear-side bottom part of the vessel 3 is coupled to a rear end side of the vehicle body 2 through a coupling pin 4 or the like to be capable of lifting and tilting (inclination-rotating). In addition, a protector 3A is integrally provided on a front-side upper part of the vessel 3 in such a manner as to cover the cab 5 from the upper side. The cab 5 is provided in the front part of the vehicle body 2 to be positioned under the protector 3A. The cab 5 forms an operator's room. An operator's seat, a handle for steering, a plurality of control levers (none of them are shown) and the like are arranged inside the cab 5.

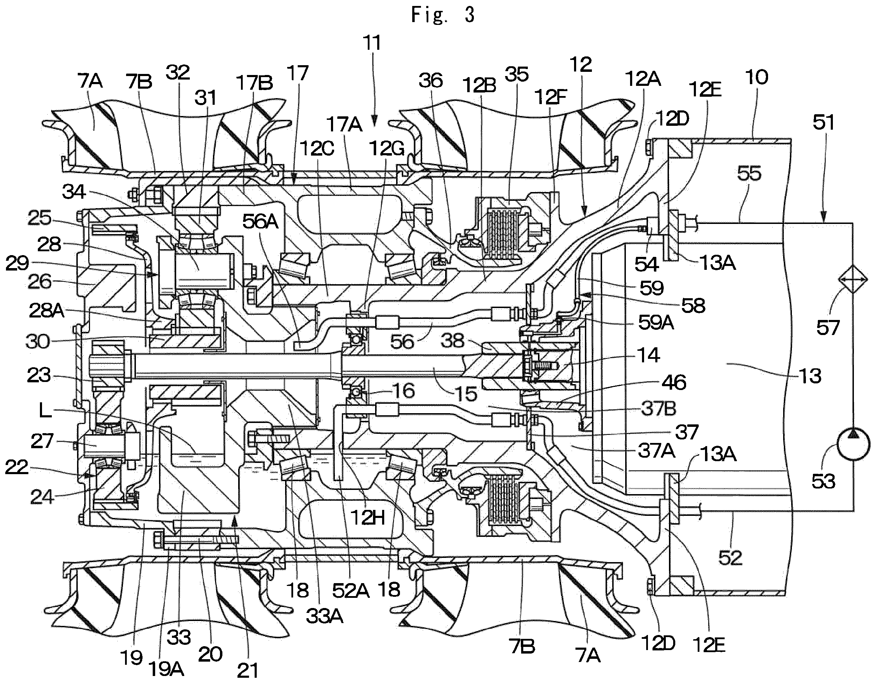

The left and right front wheels 6 are rotatably arranged on the front side of the vehicle body 2 (the left front wheel only is shown). The left and right front wheels 6 are configured as steered wheels that are steered by an operator. The left and right rear wheels 7 are rotatably arranged on the rear side of the vehicle body 2. The left and right rear wheels 7 are configured as drive wheels of the dump truck 1 and are driven and rotated integrally with a wheel attaching cylinder 17 by a traveling device 11 as shown in Fig. 3. The rear wheel 7 includes two rows of tires 7A composed of dual tires and rims 7B each located in a radial inside of the tire 7A.

An engine 8 is positioned under the cab 5 to be provided within the vehicle body 2. The engine 8 is configured by, for example, a diesel engine or the like, and drives an electric motor 13, a hydraulic pump (not shown), which will be described later, and the like for rotation, which are mounted on the vehicle body 2. Pressurized oil delivered from the hydraulic pump is supplied to hoist cylinders 9, a steering cylinder for power steering (not shown) and the like.

The hoist cylinders 9 are provided between the vehicle body 2 and the vessel 3. The hoist cylinders 9 are positioned between the front wheel 6 and the rear wheel 7 to be located on both left and right sides of the vehicle body 2. Each of the hoist cylinders 9 expands and contracts in the upper-lower direction by delivery/suction of the pressurized oil from/to the hydraulic pump to lift and tilt (inclination-rotate) the vessel 3 around the coupling pin 4.

An axle housing 10 on the rear wheel side is provided on a rear side of the vehicle body 2. The axle housing 10 is formed as a hollow cylindrical body that extends in the left-right direction. The axle housing 10 is attached through left and right rear-wheel side suspensions 10A to the rear side of the vehicle body 2. The traveling devices 11 for driving the left and right rear wheels 7 are provided to both left and right sides of the axle housing 10 respectively.

The traveling devices 11 are positioned on both the left and right sides of the axle housing 10 to be provided in the left and right rear wheels 7. As shown in Fig. 3, the traveling device 11 includes a spindle 12, the electric motor 13, a rotation shaft 15, the wheel attaching cylinder 17, a gear reduction mechanism 21, a coupling 38, a coupling housing 46, and a lubricating oil circulation circuit 51. The traveling device 11 decelerates rotation of the rotation shaft 15 by the gear reduction mechanism 21 and drives the left and right rear wheels 7 as drive wheels by a large rotational torque for rotation.

The spindle 12 is attached to each of both the left and right sides of the axle housing 10. The spindle 12 is formed in a stepped cylindrical shape extending axially (in the left-right direction) and includes a tapered part 12A, an intermediate cylindrical part 12B and a small-diameter cylindrical part 12C. The tapered part 12A is formed in a tapered shape to gradually reduce in diameter from an axial one side (axle housing 10-side) toward an axial other side of the spindle 12 and is attached to an end part of the axle housing 10 by using a plurality of bolts 12D. The intermediate cylindrical part 12B is formed integrally with a diameter-reduced side of the tapered part 12A to axially extend. The small-diameter cylindrical part 12C has an outer diameter dimension smaller than the intermediate cylindrical part 12B and is formed integrally with a tip end side of the intermediate cylindrical part 12B.

A plurality of motor attaching seatings 12E projecting to a radial inside of the tapered part 12A are provided on an axial one side of the tapered part 12A and the electric motor 13 is attached to the motor attaching seatings 12E. An annular flange part 12F projecting to a radial outside of the tapered part 12A is provided on an outer peripheral side of the tapered part 12A and an after-mentioned wet type brake 35 is attached to the flange part 12F.

On the other hand, a tip end of the small-diameter cylindrical part 12C is formed as an open end, and a cylindrical projection part 33A of an after-mentioned second-stage carrier 33 is spline-coupled to an inner peripheral side of the small-diameter cylindrical part 12C. An annular inner-side projection part 12G projecting to a radial inside of the small-diameter cylindrical part 12C is formed integrally with an inner peripheral side of an axial intermediate part of the small-diameter cylindrical part 12C and an after-mentioned bearing 16 is attached to the inner-side projection part 12G. Further, a radial hole 12H is drilled on a lower side of the small-diameter cylindrical part 12C to penetrate therethrough in the upper-lower direction (in a radial direction of the small-diameter cylindrical part 12C), and a tip end 52A of an after-mentioned suction pipe 52 is inserted in the radial hole 12H.

The electric motor 13 for travel is located within the axle housing 10 and within the tapered part 12A of the spindle 12. A plurality of attachment flanges 13A are arranged on an outer peripheral side of the electric motor 13, and the attachment flanges 13A are attached to the motor attaching seatings 12E of the spindle 12 (tapered part 12A) by using bolts or the like.

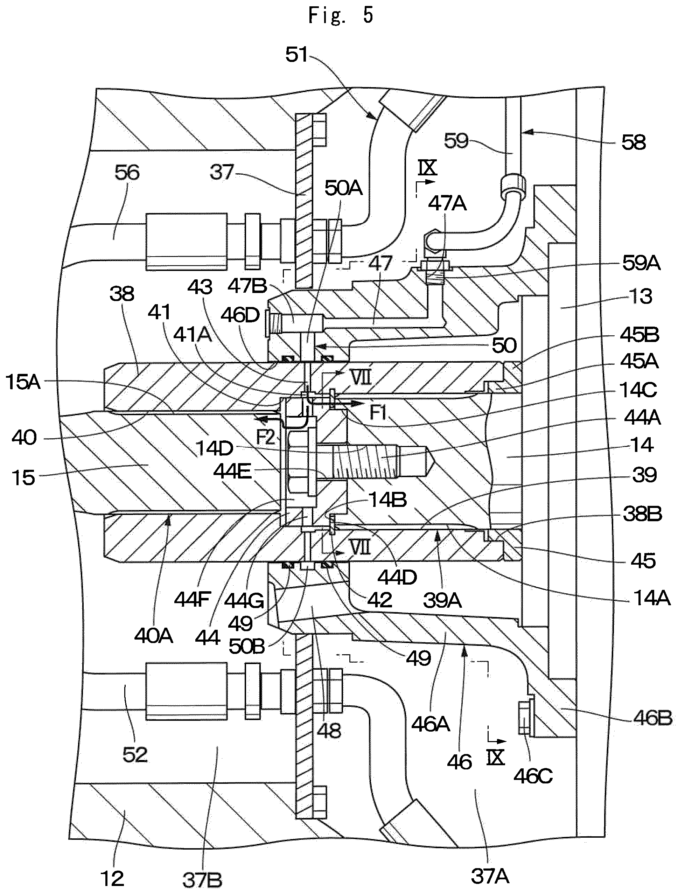

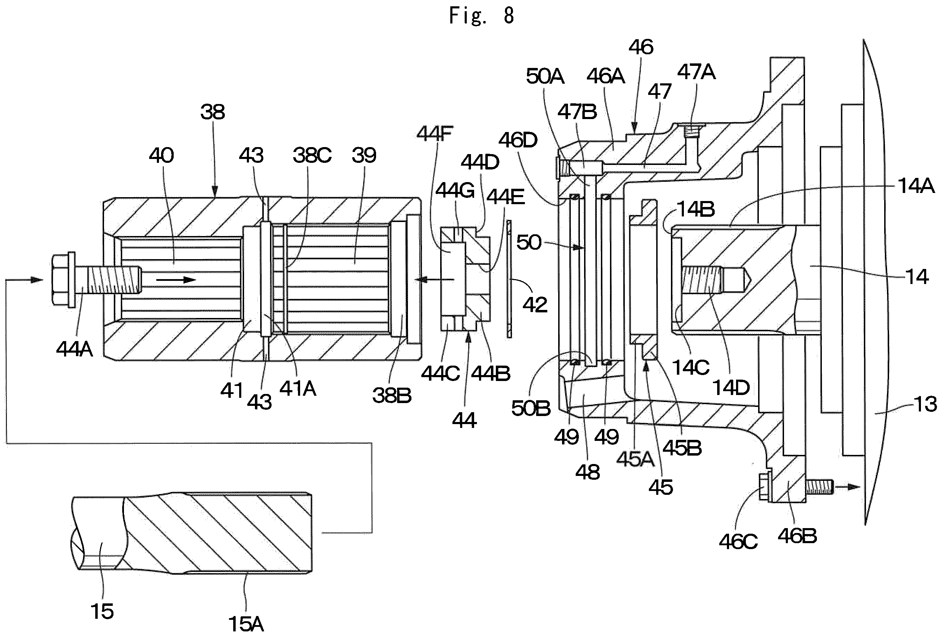

A motor shaft 14 projects out of the electric motor 13. The electric motor 13 drives the motor shaft 14 for rotation by supply of electric power from a power generator (not shown) mounted on the vehicle body 2 to transmit the rotation of the motor shaft 14 to the rotation shaft 15. As shown in Fig. 5 and Fig. 8, a motor shaft spline portion 14A in which a spline groove is formed is formed on an outer peripheral surface of the motor shaft 14, and the motor shaft spline portion 14A is engaged to a motor shaft-side hole spline portion 39 of an after-mentioned coupling 38. A bottomed stopper attaching hole 14C is provided in a projection end 14B of the motor shaft 14, and a bolt hole (female screw hole) 14D is formed in the center of a bottom of the stopper attaching hole 14C.

The rotation shaft 15 is provided on an inner peripheral side of the spindle 12 to axially extend therein. The rotation shaft 15 is formed by a single elongated bar-shaped body. A rotation shaft spline portion 15A is formed on an outer peripheral surface of one end side of the rotation shaft 15 (electric motor 13-side), and the rotation shaft spline portion 15A is engaged to a rotation shaft-side hole spline portion 40 of the after-mentioned coupling 38. In this way, the rotation shaft 15 is jointed via the coupling 38 to the motor shaft 14 of the electric motor 13 and is driven and rotated by the electric motor 13. The other end side of the rotation shaft 15 projects out of the open end of the small-diameter cylindrical part 12C of the spindle 12. An after-mentioned sun gear 23 is attached to the other end (projection end) of the rotation shaft 15. The axial intermediate part of the rotation shaft 15 is rotatably supported by the bearing 16 attached on the inner-side projection part 12G of the spindle 12.

The wheel attaching cylinder 17 is rotatably provided via two roller bearings 18 on an outer peripheral side of the small-diameter cylindrical part 12C configuring part of the spindle 12. The wheel attaching cylinder 17 is supported by the two roller bearings 18 and includes a hollow cylindrical part 17A axially extending on the outer peripheral side of the small-diameter cylindrical part 12C and an extension cylindrical part 17B that projects axially from a tip end of the hollow cylindrical part 17A and extends in a direction away from the spindle 12. The cylindrical rim 7B configuring part of the rear wheel 7 is removably attached to the outer peripheral side of the wheel attaching cylinder 17, and the rear wheel 7 rotates integrally with the wheel attaching cylinder 17. An after-mentioned internal gear 32 and an outer drum 19 are fixed integrally to an end part of the extension cylindrical part 17B of the wheel attaching cylinder 17 by using elongated bolts 20. The outer drum 19 is composed of a cylindrical body, and a flange part 19A provided on an axial one side of the outer drum 19. The outer drum 19 is fixed via the internal gear 32 to the wheel attaching cylinder 17, and an axial other side of the outer drum 19 is formed as an open end.

The gear reduction mechanism 21 is provided between the rotation shaft 15 and the wheel attaching cylinder 17. The gear reduction mechanism 21 is configured by a first-stage planetary gear reduction mechanism 22 and a second-stage planetary gear reduction mechanism 29. The gear reduction mechanism 21 decelerates the rotation of the rotation shaft 15 by two stages, which is transmitted to the wheel attaching cylinder 17.

The first-stage planetary gear reduction mechanism 22 includes the sun gear 23, a plurality of planetary gears 24 and a carrier 26. The sun gear 23 is spline-coupled to a tip end of the rotation shaft 15 projecting out of the spindle 12 (small-diameter cylindrical part 12C). The plurality of planetary gears 24 are engaged to the sun gear 23 and a ring-shaped internal gear 25, and rotate and revolve around the sun gear 23. The carrier 26 is fixed on an open end of the outer drum 19 integral with the wheel attaching cylinder 17 by bolts or the like and rotatably supports the plurality of planetary gears 24 through support pins 27.

Here, the internal gear 25 is formed by using a ring gear to surround the sun gear 23 and the plurality of planetary gears 24 from a radial outside thereof. The internal gear 25 is located through a radial gap to an inner peripheral surface of the outer drum 19 to be rotatable relative to the outer drum 19. The rotation of the internal gear 25 is transmitted through a coupling 28 to the second-stage planetary gear reduction mechanism 29.

The coupling 28 is provided in a position between the first-stage planetary gear reduction mechanism 22 and the second-stage planetary gear reduction mechanism 29. The coupling 28 is formed in a disc shape with a boss 28A in the center part. An outer peripheral side of the coupling 28 is spline-coupled to the first-stage internal gear 25. An inner peripheral side of the boss 28A in the coupling 28 is spline-coupled to a second-stage sun gear 30. The coupling 28 transmits rotation of the first-stage internal gear 25 to the second-stage sun gear 30 to cause the sun gear 30 to rotate integrally with the first-stage internal gear 25.

As the sun gear 23 is rotated integrally with the rotation shaft 15 by the electric motor 13, the first-stage planetary gear reduction mechanism 22 converts the rotation of the sun gear 23 into a rotating movement of the plurality of planetary gears 24 on its axis and a revolving movement thereof. Further, the rotating movement on its axis of the planetary gears 24 is transmitted to the internal gear 25 as the decelerated rotation and the rotation of the internal gear 25 is transmitted through the coupling 28 to the second-stage planetary gear reduction mechanism 29. On the other hand, the revolving movement of the planetary gears 24 is transmitted via the outer drum 19 to the wheel attaching cylinder 17 as rotation of the carrier 26. At this time, since the wheel attaching cylinder 17 rotates integrally with the second-stage internal gear 32, the revolving movement of the planetary gears 24 is controlled to the rotation synchronized with the wheel attaching cylinder 17.

The second-stage planetary gear reduction mechanism 29 includes the cylindrical sun gear 30, a plurality of planetary gears 31, and the carrier 33. The sun gear 30 is spline-coupled to an inner peripheral side of the boss 28A in the coupling 28 to rotate integrally with the coupling 28. The plurality of planetary gears 31 are engaged to the sun gear 30 and the ring-shaped internal gear 32 to rotate and revolve around the sun gear 30. The carrier 33 rotatably supports the planetary gears 31 through support pins 34. A cylindrical projection part 33A in a cylindrical shape is provided in the center part of the carrier 33 and an outer peripheral side of the cylindrical projection part 33A is spline-coupled to an inner peripheral side of the small-diameter cylindrical part 12C. Here, the second-stage internal gear 32 is formed by using a ring gear surrounding the sun gear 30, the plurality of planetary gears 31, and the like from a radial outside thereof. The internal gear 32 is fixed integrally between the extension cylindrical part 17B in the wheel attaching cylinder 17 and the outer drum 19 by using the elongated bolts 20.

In the second-stage planetary gear reduction mechanism 29, the cylindrical projection part 33A of the carrier 33 is spline-coupled to the small-diameter cylindrical part 12C of the spindle 12. Therefore, the revolving movement of the planetary gear 31 (rotation of the carrier 33) is restrained. As a result, when the sun gear 30 rotates integrally with the coupling 28, the second-stage planetary gear reduction mechanism 29 converts the rotation of the sun gear 30 into a rotating movement of the planetary gear 31 and transmits the rotating movement of the planetary gear 31 to the second-stage internal gear 32. With this configuration, the internal gear 32 decelerates and rotates, and rotational torque of large output decelerated by two stages in the first-stage planetary gear reduction mechanism 22 and in the second-stage planetary gear reduction mechanism 29 is transmitted to the wheel attaching cylinder 17 to which the internal gear 32 is fixed.

Here, lubricating oil L is stored in the inside of the wheel attaching cylinder 17, and a liquid surface of the lubricating oil L is in a position lower than the lowest part of the small-diameter cylindrical part 12C configuring part of the spindle 12, for example. Therefore, a lower part of the roller bearing 18 is immersed in the lubricating oil L and part of the planetary gear reduction mechanisms 22, 29 is always lubricated by the lubricating oil L. In addition, the lubricating oil L splashed by the planetary gear reduction mechanisms 22, 29 scatters in a mist shape in the spindle 12, which is supplied also to the bearing 16 supporting the rotation shaft 15. As a result, at the operating of the traveling device 11, the resistance against the stirring of the lubricating oil L is made small, making it possible to suppress the energy loss and heat generation of the traveling device 11.

The wet type brake 35 is attached to the flange part 12F of the spindle 12. The wet type brake 35 is configured of a wet multi-plate type of hydraulic brake and applies braking forces to a brake hub 36 attached to the wheel attaching cylinder 17. With this configuration, braking forces are applied to the rotation of the wheel attaching cylinder 17, that is, the rotation of the rear wheel 7.

A partition wall 37 is provided within the spindle 12. The partition wall 37 is formed by an annual plate body. An outer peripheral side of the partition wall 37 is attached on a boundary part between the tapered part 12A and the intermediate cylindrical part 12B of the spindle 12 by using bolts or the like. The partition wall 37 partitions the inside of the spindle 12 into a motor accommodating space part 37A accommodating the electric motor 13 and a cylindrical space part 37B communicating with the inside of the wheel attaching cylinder 17.

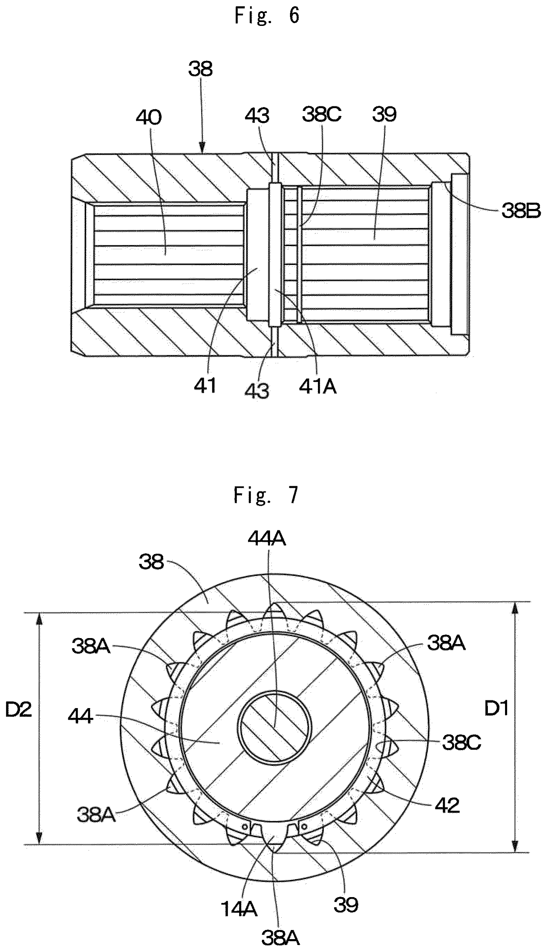

The coupling 38 is located in the center part of the annular partition wall 37 to establish joint between the motor shaft 14 of the electric motor 13 and the rotation shaft 15. As shown in Fig. 5 to Fig. 8, the coupling 38 is formed in a cylindrical shape as a whole and the motor shaft-side hole spline portion 39 in which a spline groove is provided is formed on an inner peripheral surface of an axial one side (motor shaft 14-side) of the coupling 38. The motor shaft-side hole spline portion 39 is spline-coupled to the motor shaft spline portion 14A of the motor shaft 14. As shown in Fig. 7, a tooth bottom circle diameter D1 of the motor shaft-side hole spline portion 39 is set to be larger than a tooth tip circle diameter D2 of the motor shaft spline portion 14A (D1 > D2) . Therefore, gaps 38A are formed between tooth bottoms of a plurality of teeth configuring part of the motor shaft-side hole spline portion 39 and tooth tips of a plurality of teeth configuring part of the motor shaft spline portion 14A. The gap 38A is formed over an entire region of the spline coupling portion 39A in the length direction to which the motor shaft spline portion 14A and the motor shaft-side hole spline portion 39 are engaged.

The rotation shaft-side hole spline portion 40 in which a spline groove is provided is formed on an inner peripheral surface of an axial other side (rotation shaft 15-side) of the coupling 38. The rotation shaft-side hole spline portion 40 is spline-coupled to the rotation shaft spline portion 15A of the rotation shaft 15. A tooth bottom circle diameter of the rotation shaft-side hole spline portion 40 is set to be larger than a tooth tip circle diameter of the rotation shaft spline portion 15A. Therefore, gaps (not shown) are formed between tooth bottoms of a plurality of teeth configuring part of the rotation shaft-side hole spline portion 40 and tooth tips of a plurality of teeth configuring part of the rotation shaft spline portion 15A. The gap is formed over an entire region of a spline coupling portion 40A in the length direction to which the rotation shaft spline portion 15A and the rotation shaft-side hole spline portion 40 are engaged.

A stopper fitting portion 41 is formed on an inner peripheral surface of an axial intermediate part of the coupling 38 to be positioned between the motor shaft-side hole spline portion 39 and the rotation shaft-side hole spline portion 40. A portion, which is adjacent to the motor shaft-side hole spline portion 39, of the stopper fitting portion 41 serves as an annular oil passage 41A having an inner diameter dimension larger than the stopper fitting portion 41, and an after-mentioned coupling oil passage 43 opens to the annular oil passage 41A.

A sleeve fitting portion 38B is provided on an end surface of an axial one side of the coupling 38. An after-mentioned sleeve 45 is fitted in the sleeve fitting portion 38B. An annular groove 38C is formed over an entire periphery on an inner peripheral surface of the coupling 38 in which the motor shaft-side hole spline portion 39 is formed. A C-letter type of a stop ring 42 for hole is attached to the annular groove 38C. As shown in Fig. 7, an outer diameter dimension of the stop ring 42 for hole attached to the annular groove 38C is set to be smaller than the tooth tip circle diameter D2 of the motor shaft spline portion 14A spline-coupled to the motor shaft-side hole spline portion 39. Therefore, the gap 38A formed between the tooth bottom of the motor shaft-side hole spline portion 39 and the tooth tip of the motor shaft spline portion 14A is not closed by the stop ring 42 for hole.

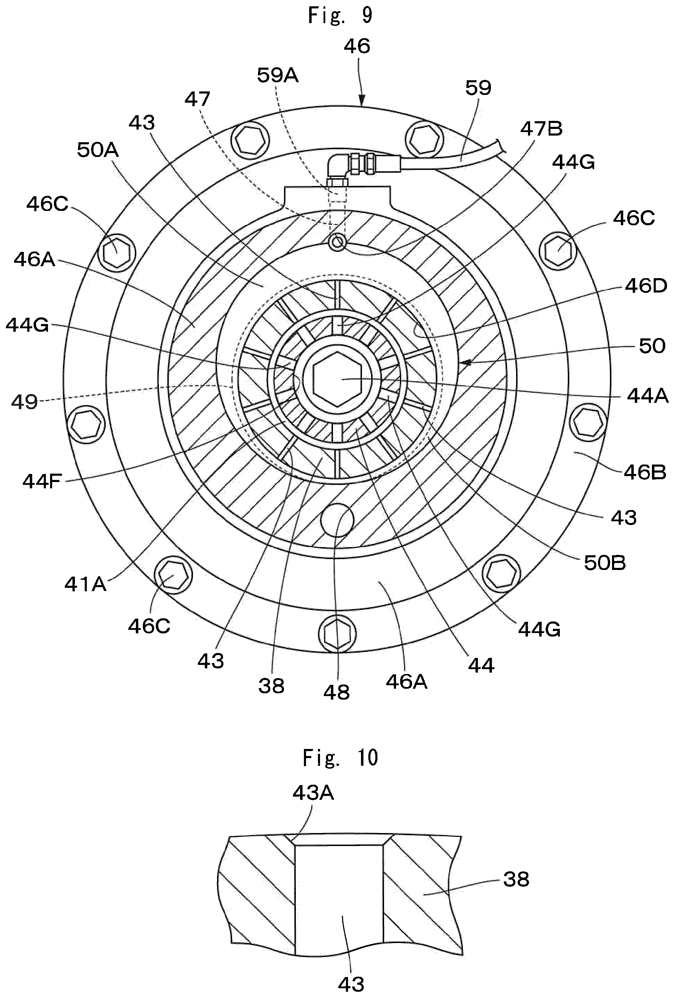

The coupling oil passage 43 is provided in the axial intermediate part of the coupling 38. The coupling oil passage 43 supplies the lubricating oil L to the spline coupling portion 39A between the motor shaft 14 (the motor shaft spline portion 14A) and the coupling 38 (the motor shaft-side hole spline portion 39) and to the spline coupling portion 40A between the rotation shaft 15 (the rotation shaft spline portion 15A) and the coupling 38 (the rotation shaft-side hole spline portion 40). The coupling oil passage 43 is formed by a plurality of oil passages radially extending by equal angular intervals from the center of the coupling 38. The coupling oil passage 43 penetrates from the annular oil passage 41A of the stopper fitting portion 41 through the outer peripheral surface of the coupling 38. With this configuration, the coupling oil passage 43 opens to (is communicated with) an after-mentioned oil reservoir portion 50. A portion, which opens to the after-mentioned oil reservoir portion 50, of the coupling oil passage 43 is formed as a tapered large-diameter open end 43A having a diameter larger than the coupling oil passage 43 (Refer to Fig. 10).

A stopper 44 is removably attached to the projection end 14B-side of the motor shaft 14 by using a stopper bolt 44A. As shown in Fig. 8, the stopper 44 is formed in a stepped cylindrical shape as a whole and is provided with a small-diameter fitting portion 44B and a large-diameter fitting portion 44C. The small-diameter fitting portion 44B is fitted in the stopper attaching hole 14C of the motor shaft 14. The large-diameter fitting portion 44C has an outer diameter dimension larger than the small-diameter fitting portion 44B and is fitted in the tooth tip circle of the motor shaft-side hole spline portion 39 of the coupling 38. The stopper 44 radially positions the coupling 38 relative to the motor shaft 14 when the large-diameter fitting portion 44C is fitted in the tooth tip circle of the motor shaft-side hole spline portion 39. A boundary part between the small-diameter fitting portion 44B and the large-diameter fitting portion 44C becomes an annular step part 44D, and the annular step part 44D axially faces the projection end 14B of the motor shaft 14.

A bolt through hole 44E is formed in the center part of the small-diameter fitting portion 44B to penetrate therethrough axially. A bottomed counterbore 44F is formed in the large-diameter fitting portion 44C concentrically with the bolt through hole 44E. The stopper 44 causes the small-diameter fitting portion 44B to be fitted in the stopper attaching hole 14C of the motor shaft 14, and puts the stop ring 42 for hole in between the annular step part 44D and the projection end 14B of the motor shaft 14. In this state, the stopper bolt 44A inserted in the bolt through hole 44E is screwed into the bolt hole 14D of the motor shaft 14. As a result, the stopper 44 is attached to the motor shaft 14 and a head of the stopper bolt 44A is accommodated in the counterbore 44F.

In addition, the plurality of stopper oil passages 44G are formed in the stopper 44 to penetrate through an outer peripheral surface of the large-diameter fitting portion 44C from the counterbore 44F. The stopper oil passage 44G comprises a plurality of oil passages radially extending by equal angular intervals from the center of the stopper 44. In a state where the motor shaft-side hole spline portion 39 of the coupling 38 is spline-coupled to the motor shaft spline portion 14A of the motor shaft 14, the stopper oil passages 44G are communicated via the annular oil passage 41A of the stopper fitting portion 41 provided in the coupling 38 with the coupling oil passage 43. With this configuration, as shown in Fig. 5, the lubricating oil L supplied to the coupling oil passage 43 of the coupling 38 flows to the annular oil passage 41A of the coupling 38, the stopper oil passages 44G of the stopper 44 and the counterbore 44F. In addition, the lubricating oil L is distributed to the spline coupling portion 39A between the motor shaft-side hole spline portion 39 and the motor shaft spline portion 14A and to the spline coupling portion 40A between the rotation shaft-side hole spline portion 40 and the rotation shaft spline portion 15A.

The sleeve 45 is provided between the axial one side of the coupling 38 and the motor shaft 14. The sleeve 45 is formed in a stepped cylindrical shape composed of a small-diameter cylindrical part 45A and a large-diameter cylindrical part 45B. An inner peripheral side of the sleeve 45 is fitted into the motor shaft 14 and an outer peripheral side of the small-diameter cylindrical part 45A is fitted into the sleeve fitting portion 38B of the coupling 38. The sleeve 45 radially positions the axial one side of the coupling 38 relative to the motor shaft 14.

Next, an explanation will be made of the coupling housing 46 to be used in the present embodiment by referring from Fig. 8 to Fig. 10.

The coupling housing 46 is attached to the electric motor 13 to surround the outer peripheral side of the coupling 38. The coupling housing 46 is provided with a cylindrical part 46A to surround the outer peripheral side of the coupling 38 and a flange part 46B of which a diameter is enlarged from an axial one side of the cylindrical part 46A (electric motor 13-side). The flange part 46B is attached to the electric motor 13 by using bolts 46C. On the other hand, a coupling fitting portion 46D is provided on an axial other side of the cylindrical part 46A. An inner peripheral surface of the coupling fitting portion 46D is slidably fitted into the outer peripheral surface of the coupling 38 to suppress the misalignment of the coupling 38. In addition, the after-mentioned oil reservoir portion 50 is formed on an inner peripheral surface of the coupling fitting portion 46D.

A housing oil passage 47 positioned above the coupling 38 and a discharge oil passage 48 positioned under the coupling 38 are formed in the cylindrical part 46A of the coupling housing 46. The housing oil passage 47 branches part of the lubricating oil L flowing in the lubricating oil circulation circuit 51 to be introduced to the coupling oil passage 43 of the coupling 38. One end 47A of the housing oil passage 47 opens to an outer peripheral surface of the cylindrical part 46A to be connected to an after-mentioned coupling lubricating pipe 59. On the other hand, the other end 47B of the housing oil passage 47 is connected to the oil reservoir portion 50 formed on the inner peripheral surface of the coupling fitting portion 46D and is communicated via the oil reservoir portion 50 with the coupling oil passage 43. In addition, two seal rings 49 sandwiching the oil reservoir portion 50 axially are arranged on the inner peripheral surface of the coupling fitting portion 46D. The two seal rings 49 perform sealing between the coupling fitting portion 46D and the coupling 38 by an inner peripheral edge of each of the two seal rings 49 coming in sliding contact with an outer peripheral surface of the coupling 38.

The oil reservoir portion 50 is formed on the inner peripheral surface of the coupling fitting portion 46D configuring part of the coupling housing 46. The oil reservoir portion 50 is communicated with the housing oil passage 47 and the coupling oil passage 43 in a state of covering the coupling 38 from the outer peripheral side. The oil reservoir portion 50 is formed as a circular groove having an internal diameter dimension larger than the coupling fitting portion 46D and is located between the two seal rings 49. The oil reservoir portion 50 is made eccentric to a radially upper side (the housing oil passage 47-side) from the center of the coupling fitting portion 46D, that is, a rotational center of the coupling 38. In addition, an upper end side of the oil reservoir portion 50 is communicated with the other end 47B of the housing oil passage 47 (Refer to Fig.9).

Here, the oil reservoir portion 50 is made eccentric to the radially upper side from the center of the coupling fitting portion 46D (the rotational center of the coupling 38). Because of this configuration, the oil reservoir portion 50 is shaped so that a capacity of a portion, which is positioned in the radially upper side, of the coupling housing 46 is made larger than a capacity of a portion, which is positioned in the radially lower side, of the coupling housing 46. That is, the oil reservoir portion 50 includes a wide-width oil reservoir portion 50A that is positioned above the coupling 38 and has a wide interval to the outer peripheral surface of the coupling 38 and a narrow-width oil reservoir portion 50B that is positioned under the coupling 38 and has a narrow interval to the outer peripheral surface of the coupling 38. The lubricating oil L stored in the wide-width oil reservoir portion 50A smoothly flows downward by its own weight, and thereby, the lubricating oil L flows through the coupling oil passage 43 into the inner peripheral side of the coupling 38. Because of this, the lubricating oil L is smoothly supplied to the spline coupling portion 39A between the motor shaft 14 and the coupling 38 and to the spline coupling portion 40A between the rotation shaft 15 and the coupling 38.

At the time of coupling the motor shaft 14 and the rotation shaft 15 by using the coupling 38, the large-diameter fitting portion 44C of the stopper 44 is caused to be fitted into the stopper fitting portion 41 in the coupling 38. On the other hand, the stop ring 42 for hole is attached to the annular groove 38C of the coupling 38, and the stop ring 42 for hole is caused to abut on the annular step part 44D of the stopper 44. This arrangement positions the stopper 44 in the axial direction of the coupling 38.

Next, the motor shaft-side hole spline portion 39 in the coupling 38 is spline-coupled to the motor shaft spline portion 14A of the motor shaft 14. In addition, in a state where the stop ring 42 for hole has abutted on the projection end 14B of the motor shaft 14, the stopper bolt 44A is caused to be screwed into the bolt hole 14D of the motor shaft 14. In this way, the rotation shaft spline portion 15A of the rotation shaft 15 is spline-coupled to the rotation shaft-side hole spline portion 40 of the coupling 38 attached to the motor shaft 14, and the rotation shaft 15 is axially inserted into the coupling 38. With this configuration, as shown in Fig. 5 the motor shaft 14 and the rotation shaft 15 can be coupled by using the coupling 38.

In this state, the coupling oil passage 43 of the coupling 38 is caused to be communicated with the oil reservoir portion 50 of the coupling housing 46 and the stopper oil passage 44G of the stopper 44 becomes communicated with the annular oil passage 41A of the stopper fitting portion 41 provided in the coupling 38. On the other hand, as shown in Fig. 7, the gap 38A is formed between a tooth bottom of the motor shaft-side hole spline portion 39 formed in the coupling 38 and a tooth tip of the motor shaft spline portion 14A. Similarly, a gap (not shown) is formed also between a tooth bottom of the rotation shaft-side hole spline portion 40 formed in the coupling 38 and a tooth tip of the rotation shaft spline portion 15A.

The lubricating oil circulation circuit 51 is provided in the inside of the spindle 12 and the axle housing 10. The main circuit of the lubricating oil circulation circuit 51 is configured of a suction pipe 52, a lubricating oil pump 53, a delivery pipe 55, a supply pipe 56 and the like. The lubricating oil circulation circuit 51 repeatedly supplies the lubricating oil L stored in the inside of the wheel attaching cylinder 17 to the gear reduction mechanism 21, the roller bearing 18, the bearing 16 and the like. In addition, the lubricating oil circulation circuit 51 is provided with an after-mentioned coupling portion lubricating circuit 58.

The suction pipe 52 is provided within the spindle 12 and the axle housing 10. A longitudinal one side of the suction pipe 52 is connected to a suction port of the lubricating oil pump 53. A longitudinal other side of the suction pipe 52 is located under the rotation shaft 15 to extend in the axial direction of the spindle 12. The tip end 52A of the suction pipe 52 is inserted in the radial hole 12H of the spindle 12 and is immersed in the lubricating oil L within the wheel attaching cylinder 17. The lubricating oil pump 53 sucks up the lubricating oil L through the suction pipe 52.

A branch joint 54 is provided in the motor attaching seating 12E provided in the spindle 12. The branch joint 54 is provided with a single inlet port and two outlet ports different in a flow quantity from each other (none of them are shown), for example. The delivery pipe 55 establishes connection between a delivery port of the lubricating oil pump 53 and the inlet port of the branch joint 54. The lubricating oil L delivered from the lubricating oil pump 53 flows through the delivery pipe 55 into the branch joint 54 and is branched into two pathways by the supply pipe 56 and the after-mentioned coupling lubricating pipe 59 connected to the two outlet ports of the branch joint 54. In addition, an oil cooler 57 is provided in the middle of the delivery pipe 55.

The supply pipe 56 is provided within the spindle 12. One end of the supply pipe 56 is connected to an outlet port, of which a flow quantity is larger, out of the two outlet ports of the branch joint 54. A longitudinal other end of the supply pipe 56 is located above the rotation shaft 15 and extends in the axil direction of the spindle 12. A tip end 56A of the supply pipe 56 extends along the rotation shaft 15 into the cylindrical projection part 33A of the second-stage carrier 33. With this configuration, most of the lubricating oil L delivered from the lubricating oil pump 53 is cooled by the oil cooler 57, and in that state, the lubricating oil L is supplied via the tip end 56A of the supply pipe 56 to the rotation shaft 15. The cooled lubricating oil L cools the rotation shaft 15 and is scattered from the rotation shaft 15, whereby the bearing 16 and the like are lubricated.

The coupling portion lubricating circuit 58 branches part of the lubricating oil L to be supplied to the gear reduction mechanism 21 and the like, which is supplied to the coupling portion (spline coupling portion 39A) between the motor shaft 14 and the coupling 38 and to the coupling portion (spline coupling portion 40A) between the rotation shaft 15 and the coupling 38. The coupling portion lubricating circuit 58 is configured by the coupling lubricating pipe 59, the housing oil passage 47 and the oil reservoir portion 50 of the coupling housing 46, the coupling oil passage 43 of the coupling 38, the stopper oil passage 44G and the counterbore 44F of the stopper 44, and the like.

The coupling lubricating pipe 59 is provided within the spindle 12 together with the supply pipe 56. One end of the coupling lubricating pipe 59 is connected to an outlet port, of which a flow quantity is smaller, out of the two outlet ports of the branch joint 54. The other end 59A of the coupling lubricating pipe 59 is connected to One end 47A of the housing oil passage 47 formed in the coupling housing 46. With this configuration, part of the lubricating oil L delivered from the lubricating oil pump 53 is introduced from the coupling lubricating pipe 59 configuring part of the coupling portion lubricating circuit 58 through the housing oil passage 47 in the coupling housing 46 to the coupling oil passage 43 of the coupling 38.

The lubricating oil L introduced into the coupling oil passage 43 is branched into a pathway indicated by an arrow F1 and a pathway indicated by an arrow F2 in Fig. 5. The lubricating oil L flowing in the pathway of the arrow F1 is supplied from the coupling oil passage 43 through the annular oil passage 41A of the stopper fitting portion 41 to the motor shaft-side hole spline portion 39. In this case, the gap 38A is formed between the tooth bottom of the motor shaft-side hole spline portion 39 and the tooth tip of the motor shaft spline portion 14A. With this configuration, the lubricating oil L flows through the gap 38A into the motor shaft-side hole spline portion 39 in the axial direction to lubricate the spline coupling portion 39A between the motor shaft-side hole spline portion 39 and the motor shaft spline portion 14A.

On the other hand, the lubricating oil L flowing in the pathway of the arrow F2 is supplied from the coupling oil passage 43 through the stopper oil passage 44G and the counterbore 44F of the stopper 44 to the rotation shaft-side hole spline portion 40. In this case, the gap (not shown) is formed between the tooth bottom of the rotation shaft-side hole spline portion 40 and the tooth tip of the rotation shaft spline portion 15A. Because of this configuration, the lubricating oil L flows through the gap into the rotation shaft-side hole spline portion 40 in the axial direction to lubricate the spline coupling portion 40A between the rotation shaft-side hole spline portion 40 and the rotation shaft spline portion 15A.

The traveling device 11 for the dump truck 1 according to the present embodiment has the configuration as described above, and next, an operation thereof will be explained.

When an operator which gets in the cab 5 of the dump truck 1 activates the engine 8, the hydraulic pump is driven and rotated, and electric power is generated by the power generator (none thereof are shown). At the time the dump truck 1 is driven to travel, the electric power is supplied from the power generator to the electric motor 13. Thereby the electric motor 13 is activated to rotate the rotation shaft 15.

The rotation of the rotation shaft 15 is decelerated by two states by the first-stage planetary gear reduction mechanism 22 and the second-stage planetary gear reduction mechanism 29 configuring the gear reduction mechanism 21, which is transmitted to the wheel attaching cylinder 17 and the wheel attaching cylinder 17 rotates with a large rotational toque. As a result, the left and right rear wheels 7 as drive wheels rotate integrally with the wheel attaching cylinder 17, making it possible to cause the dump truck 1 to travel.

At the operating of the traveling device 11, the lubricating oil L stored in the wheel attaching cylinder 17 is stirred by the planetary gears 24, 31 configuring the planetary gear reduction mechanisms 22, 29, and the like, which is supplied to engaging parts between gears, the roller bearing 18, the bearing 16 and the like. In addition, the lubricating oil L sequentially drops downward to be collected to a lower side of the wheel attaching cylinder 17.

The lubricating oil L collected in the lower side of the wheel attaching cylinder 17 is sucked up from the tip end 52A of the suction pipe 52 by the lubricating oil pump 53, which is delivered to the delivery pipe 55. After the lubricating oil L delivered to the delivery pipe 55 is cooled by the oil cooler 57, the cooled lubricating oil L flows into the branch joint 54. Most of the lubricating oil L having flowed into the branch joint 54 is introduced to the supply pipe 56, which is then supplied through the tip end 56A of the supply pipe 56 to the rotation shaft 15. With this configuration, the rotation shaft 15 can be cooled by the lubricating oil L, and the bearing 16 and the like can be lubricated by the lubricated oil L scattered from the rotation shaft 15.

The lubricating oil L introduced to the coupling lubricating pipe 59 from the branch joint 54 flows through the housing oil passage 47 of the coupling housing 46 into the oil reservoir portion 50. The lubricating oil L is temporally stored in the oil reservoir portion 50 and is thereafter introduced through the coupling oil passage 43 in the coupling 38 to the annular oil passage 41A. The lubricating oil L introduced to the annular oil passage 41A is branched into the pathway indicated by the arrow F1 and the pathway indicated by the arrow F2 in Fig. 5.

The lubricating oil L flowing in the pathway of the arrow F1 is supplied from the coupling oil passage 43 through the annular oil passage 41A to the motor shaft-side hole spline portion 39. In this case, the gap 38A is formed between the tooth bottom of the motor shaft-side hole spline portion 39 and the tooth tip of the motor shaft spline portion 14A. With this configuration, the lubricating oil L flows through the gap 38A into the motor shaft-side hole spline portion 39 in the axial direction, making it possible to lubricate the spline coupling portion 39A between the motor shaft-side hole spline portion 39 and the motor shaft spline portion 14A by the lubricating oil L. The residual amount of the lubricating oil L supplied to the spline coupling portion 39A between the motor shaft-side hole spline portion 39 and the motor shaft spline portion 14A flows downward from the fitting portion between the coupling 38 (the sleeve fitting portion 38B) and the sleeve 45 into the coupling housing 46. The lubricating oil L is discharged through the discharge oil passage 48 to an exterior of the coupling housing 46 (inside the spindle 12). With this configuration, the lubricating oil L can be prevented from leaking to the electric motor 13-side, thus protecting the electric motor 13.

On the other hand, the lubricating oil L flowing in the pathway of the arrow F2 is supplied from the coupling oil passage 43 through the annular oil passage 41A, the stopper oil passage 44G and the counterbore 44F in the stopper 44 to the rotation shaft-side hole spline portion 40. In this case, the gap (not shown) is formed between the tooth bottom of the rotation shaft-side hole spline portion 40 and the tooth tip of the rotation shaft spline portion 15A. With this configuration, the lubricating oil L flows through the gap into the rotation shaft-side hole spline portion 40 in the axial direction, making it possible to lubricate the spline coupling portion 40A between the rotation shaft-side hole spline portion 40 and the rotation shaft spline portion 15A. The residual amount of the lubricating oil L supplied to the spline coupling portion 40A between the rotation shaft-side hole spline portion 40 and the rotation shaft spline portion 15A is discharged to the outer peripheral surface of the rotation shaft 15 from the rotation shaft spline portion 15A. The lubricating oil L scatters into the spindle 12 in a mist shape due to the rotation of the rotation shaft 15 to lubricate the bearing 16 that supports the rotation shaft 15.

Here, when the coupling 38 rotates at high speeds by the electric motor 13, a large centrifugal force acts on the coupling 38, thereby making it possible to interrupt the flow of the lubricating oil L introduced through the coupling oil passage 43 to the annular oil passage 41A. Therefore, the lubricating property to the spline coupling portion 39A between the motor shaft 14 and coupling 38 and to the spline coupling portion 40A between the rotation shaft 15 and coupling 38 possibly deteriorates.

On the other hand, in the traveling device 11 according to the present embodiment, the oil reservoir portion 50 is formed in the coupling fitting portion 46D of the coupling housing 46 to be communicated with the housing oil passage 47 and the coupling oil passage 43 and temporarily store the lubricating oil L therein. The oil reservoir portion 50 is made eccentric to the upper side from the center of the coupling fitting portion 46D. Because of this configuration, the oil reservoir portion 50 includes the wide-width oil reservoir portion 50A that has the wide interval to the outer peripheral surface of the coupling 38 and the narrow-width oil reservoir portion 50B that has the narrow interval to the outer peripheral surface of the coupling 38. The capacity of the wide-width oil reservoir portion 50A which is positioned in the radially upper side of the coupling housing 46 is made larger than the capacity of the narrow-width oil reservoir portion 50B which is positioned in the radially lower side of the coupling housing 46.

Therefore, the lubricating oil L stored in the wide-width oil reservoir portion 50A smoothly flows downward through the coupling oil passage 43 by its own weight. Accordingly, even in a state where the large centrifugal force acts on the coupling 38 at the high-speed rotation, the lubricating oil L is smoothly introduced through the coupling oil passage 43 into the annular oil passage 41A. As a result, even in a case where the coupling 38 rotates at high speeds, a sufficient amount of the lubricating oil L can be supplied to the spline coupling portion 39A between the motor shaft 14 and the coupling 38 and to the spline coupling portion 40A between the rotation shaft 15 and the coupling 38, making it possible to highly improve the lubricating property.

In addition, the portion, which opens to the oil reservoir portion 50, of the coupling oil passage 43 is formed as the tapered large-diameter open end 43A having the diameter larger than the coupling oil passage 43. Because of the configuration, the lubricating oil L stored in the oil reservoir portion 50 can further smoothly be introduced to the coupling oil passage 43. Therefore, a sufficient amount of the lubricating oil L can be supplied to the spline coupling portion 39A between the motor shaft 14 and the coupling 38 and to the spline coupling portion 40A between the rotation shaft 15 and the coupling 38 from the coupling oil passage 43 through the annular oil passage 41A and the like.

In this way, the traveling device 11 for the working vehicle according to the embodiment includes: the electric motor 13 that is provided on the vehicle body in the working vehicle having the vehicle wheels; the motor shaft 14 that outputs the rotation of the electric motor 13; the rotation shaft 15 to which the rotation of the motor shaft 14 is transmitted; the gear reduction mechanism 21 that decelerates the rotation of the rotation shaft 15 and transmits the decelerated rotation to the vehicle wheels; the lubricating oil circulation circuit 51 that supplies the lubricating oil L to the gear reduction mechanism 21; the cylindrical coupling 38 for joint between the motor shaft 14 and the rotation shaft 15; the coupling housing 46 that is provided in the electric motor 13 to be provided with the fitting portion slidably fitted on the outer peripheral surface of the coupling 38; the coupling oil passage 43 that is provided in the coupling 38 to supply the lubricating oil L to the spline coupling portion 39A between the motor shaft 14 and the coupling 38 and to the spline coupling portion 40A between the rotation shaft 15 and the coupling 38; and the housing oil passage 47 that is provided in the coupling housing 46 to branch part of the lubricating oil L flowing in the lubricating oil circulation circuit 51 to be introduced to the coupling oil passage 43, characterized by including the oil reservoir portion 50 that is provided in the coupling housing 46 to be communicated with the housing oil passage 47 and the coupling oil passage 43 in a state where the coupling 38 is covered from the outer peripheral side thereof and to store the lubricating oil L to be supplied through the coupling oil passage 43 to the spline coupling portion 39A between the motor shaft 14 and the coupling 38 and to the spline coupling portion 40A between the rotation shaft 15 and the coupling 38, wherein the oil reservoir portion 50 is shaped so that the capacity of the portion positioned on the radially upper side of the coupling housing 46 is larger than the capacity of the portion positioned on the radially lower side of the coupling housing 46.

According to this configuration, the lubricating oil L stored in the portion, which has the shape of which the capacity becomes larger, of the oil reservoir portion 50 in the coupling housing 46 smoothly flows downward by its own weight. Because of this, even in a state where the large centrifugal force acts on the coupling 38 at the high-speed rotation, the lubricating oil L is smoothly introduced through the coupling oil passage 43 into the annular oil passage 41A. As a result, also at the high-speed rotation of the coupling 38 a sufficient amount of the lubricating oil L can be supplied to the spline coupling portion 39A between the motor shaft 14 and the coupling 38 and to the spline coupling portion 40A between the rotation shaft 15 and the coupling 38, appropriately lubricating the spline coupling portions 39A, 40A.

In the embodiment, the oil reservoir portion 50 is formed in the circular shape made eccentric to the radially upper side from the rotational center of the coupling 38. According to this configuration, the capacity of the portion, which is made eccentric to the rotational center of the coupling 38, of the oil reservoir portion 50 can be made larger.

In the embodiment, the oil reservoir portion 50 includes the wide-width oil reservoir portion 50A that has the wide interval to the outer peripheral surface of the coupling 38 and the narrow-width oil reservoir portion 50B that has the narrow interval to the outer peripheral surface of the coupling 38. The wide-width oil reservoir portion 50A is located in the radially upper side of the coupling housing 46. According to this configuration, even in a case where the coupling 38 rotates at high speeds, the lubricating oil L stored in the wide-width oil reservoir portion 50A can smoothly flow into the coupling oil passage 43 by its own weight.

In the embodiment, the large-diameter open end 43A having the diameter larger than the coupling oil passage 43 is formed in the portion, which opens to the oil reservoir portion 50, of the coupling oil passage 43. Because of the configuration, the lubricating oil L stored in the oil reservoir portion 50 can further smoothly be introduced to the coupling oil passage 43. A sufficient amount of the lubricating oil L can be supplied to the spline coupling portion 39A between the motor shaft 14 and the coupling 38 and to the spline coupling portion 40A between the rotation shaft 15 and the coupling 38.

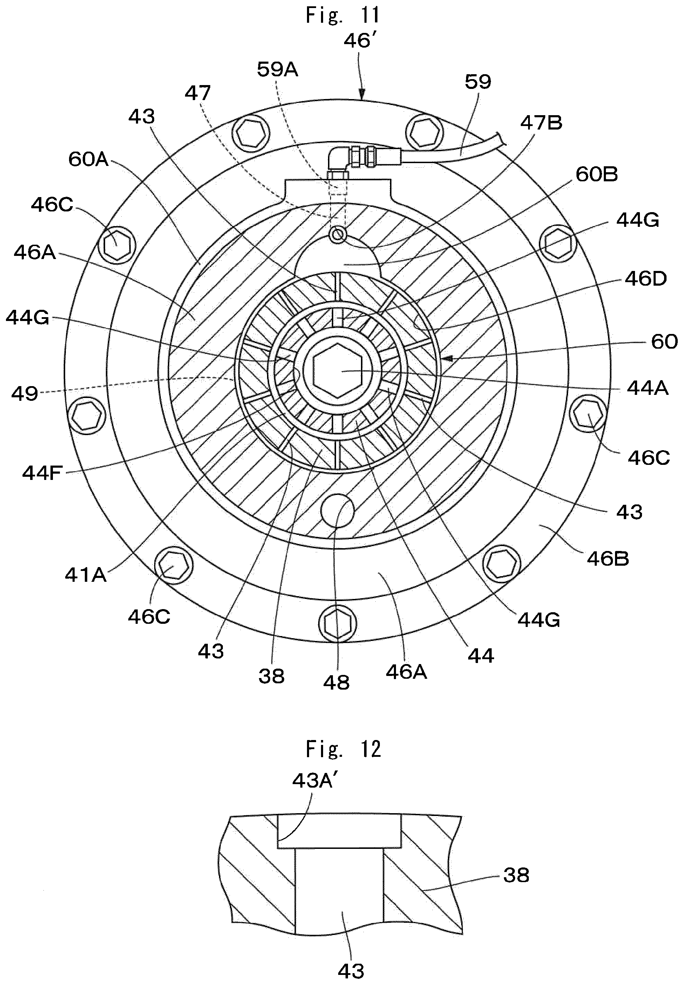

It should be noted that in the embodiment, the oil reservoir portion 50 provided in the coupling housing 46 is formed in the circular shape made eccentric to the radially upper side from the center of the coupling fitting portion 46D (the rotational center of the coupling 38). The oil reservoir portion 50 is exemplified as a component including the wide-width oil reservoir portion 50A that has the wide interval to the outer peripheral surface of the coupling 38 and the narrow-width oil reservoir portion 50B that has the narrow interval to the outer peripheral surface of the coupling 38. However, the present invention is not limited thereto but an oil reservoir portion may be an oil reservoir portion 60 shown as a first modification example as shown in Fig. 11, for example.

The oil reservoir portion 60 according to the first modification example is formed in a gourd shape as a whole by a circular part 60A that is provided in a coupling housing 46' to be located concentrically with the center of the coupling fitting portion 46D (the rotational center of the coupling 38) and a semicircular part 60B located in the radially upper side of the coupling housing 46. An upper end side of the semicircular part 60B is communicated with the other end 47B of the housing oil passage 47. Because of this configuration, a capacity of a portion (the semicircular part 60B), which is positioned in a radially upper side of the coupling housing 46', of the oil reservoir portion 60 is made larger. As a result, also in the oil reservoir portion 60 according to the first modification example, an operational effect similar to that of the oil reservoir portion 50 according to the embodiment can be acquired.

In addition, the embodiment shows as an example a case where the tapered large-diameter open end 43A having the diameter larger than the coupling oil passage 43 is formed in the portion, which opens to the oil reservoir portion 50, of the coupling oil passage 43 provided in the coupling 38. However, the present invention is not limited thereto but may be applied to, for example, a second modification example as shown in Fig. 12 in which a large-diameter open end 43A' in a counterbore shape that has a diameter (bore diameter) larger than the coupling oil passage 43 and is composed of a bottomed hole located concentrically with the coupling oil passage 43.

Further, in the embodiment, the dump truck 1 of a rear-wheel drive type is explained as an example. However, the present invention is not limited thereto but the present invention may be applied to a dump truck of a front-wheel drive type or a four-wheel drive type driving front and rear wheels together.

### DESCRIPTION OF REFERENCE NUMERALS

- 1:: DUMP TRUCK
- 2:: VEHICLE BODY
- 7:: REAR WHEEL (VEHICLE WHEEL)
- 11:: TRAVELING DEVICE
- 13:: ELECTRIC MOTOR
- 14:: MOTOR SHAFT
- 15:: ROTATION SHAFT
- 15A:: ROTATION SHAFT SPLINE PORTION
- 21:: GEAR REDUCTION MECHANISM
- 38:: COUPLING
- 39:: MOTOR SHAFT-SIDE HOLE SPLINE PORTION
- 39A, 40A:: SPLINE COUPLING PORTION
- 40:: ROTATION SHAFT-SIDE HOLE SPLINE PORTION
- 43:: LUBRICATING OIL PASSAGE
- 43A, 43A':: LARGE-DIAMETER OPEN END
- 46, 46':: COUPLING HOUSING
- 47:: HOUSING OIL PASSAGE
- 50, 60:: OIL RESERVOIR PORTION
- 50A:: WIDE-WIDTH OIL RESERVOIR PORTION
- 50B:: NARROW-WIDTH OIL RESERVOIR PORTION
- 51:: LUBRICATING OIL CIRCULATION CIRCUIT

## Claims

1. A traveling device for a working vehicle comprising:
a motor that is provided on a vehicle body in the working vehicle having vehicle wheels;
a motor shaft that outputs rotation of the motor;
a rotation shaft to which the rotation of the motor shaft is transmitted;
a gear reduction mechanism that decelerates the rotation of the rotation shaft and transmits the decelerated rotation to the vehicle wheels;
a lubricating oil circulation circuit that supplies lubricating oil to the gear reduction mechanism;
a cylindrical coupling for joint between the motor shaft and the rotation shaft;
a coupling housing that is provided in the motor to be provided with a fitting portion slidably fitted on an outer peripheral surface of the coupling;
a coupling oil passage that is provided in the coupling to supply the lubricating oil to a coupling portion between the motor shaft and the coupling and a coupling portion between the rotation shaft and the coupling; and
a housing oil passage that is provided in the coupling housing to branch part of the lubricating oil flowing in the lubricating oil circulation circuit to be introduced to the coupling oil passage, **characterized by** including:
an oil reservoir portion that is provided in the coupling housing to be communicated with the housing oil passage and the coupling oil passage in a state where the coupling is covered from an outer peripheral side thereof and to store the lubricating oil to be supplied through the coupling oil passage to the coupling portion between the motor shaft and the coupling and the coupling portion between the rotation shaft and the coupling, wherein the oil reservoir portion is shaped so that a capacity of a portion positioned on a radially upper side of the coupling housing is larger than a capacity of a portion positioned on a radially lower side of the coupling housing.

2. The traveling device for the working vehicle according
to claim 1, wherein
the oil reservoir portion is formed in a circular shape to be made eccentric to a radially upper side from a rotational center of the coupling.

3. The traveling device for the working vehicle according
to claim 1, wherein
the oil reservoir portion includes:
a wide-width oil reservoir portion that has a wide interval to an outer peripheral surface of the coupling; and
a narrow-width oil reservoir portion that has a narrow interval to the outer peripheral surface of the coupling, and
the wide-width oil reservoir portion is located in a radially upper side of the coupling housing.

4. The traveling device for the working vehicle according
to claim 1, further comprising:
a large-diameter open end formed in a portion, which opens to the oil reservoir portion, of the coupling oil passage, the large-diameter open end having a diameter larger than the coupling oil passage.
